# EUROPÄISCHE PATENTANMELDUNG

(11) **EP 0 930 325 A2**
(43) Veröffentlichungstag der Anmeldung: **21.07.1999**
(21) Anmeldenummer: 98124103.7
(22) Anmeldetag: 18.12.1998
(51) Int. Cl.: C08G 59/32, C09D 163/00, C09D 183/06, C09D 5/03

(54) **Pulverlackzusammensetzung enthaltend ein epoxyfunktionalisiertes Silanharz**

(30) Priorität: 15.01.1998 DE 19801266
(71) Anmelder: FRAUNHOFER-GESELLSCHAFT ZUR FÖRDERUNG DER ANGEWANDTEN FORSCHUNG E.V., 80636 München (DE)
(72) Erfinder: Barglik-Chory Christine Dr., 97234 Fuchsstadt (DE); Haas, Karl-Heinz Dr., 97209 Veitshöchheim (DE)
(74) Vertreter: Pfenning, Meinig & Partner

(57) **Zusammenfassung**

Die Erfindung betrifft eine Pulverlackzusammensetzung, enthaltend als Binder epoxyreaktive Polymere und als Härter epoxyfunktionelle Siloxanharze sowie gegebenenfalls Zusatzstoffe wie Pigmente und/oder Füllstoffe und/oder Hitzestabilisatoren und/oder Additive wie Verlauf- und Entgasungsmittel, wobei der Härter eine Verbindung ist, die durch Hydrolyse und Kondensation eines Organosilans R₂SiX₂ eines epoxyfunktionalisierten Silans hergestellt wird.

## Beschreibung

Die Erfindung betrifft eine spezielle Pulverlackzusammensetzung, die als Härter ein epoxyfunktionalisiertes Siloxanharz enthält.

Pulverlacke bestehen im wesentlichen aus Teilchen, die bei Raum- bzw. Aufbringungstemperatur fest sind und die bei höheren Temperaturen aufschmelzen und verlaufen. Dadurch bildet sich eine Lackschicht, die während des Einbrennvorgangs durch Vernetzungsreaktionen aushärtet. Der Vorgang einer Pulverlack-Beschichtung umfaßt die Extrusion der Bestandteile unter Zugabe von Zusatzstoffen und Hilfsmitteln wie Verlaufsmitteln,Pigmenten, Füllstoffen etc., die Kaltvermahlung zu definierten Partikelgrößen, die Pulverauftragung auf hitzeresistente Substrate, z.B. durch elektrostatisches Pulversprühen und das Aufschmelzen und Aushärten des Pulvers durch Erwärmung auf 120 bis 210 °C.

Seit etwa 20 Jahren sind hitzehärtbare Pulverlacke bekannt, die neben rein organischen Komponenten Organopolysiloxane enthalten.

Aus der EP 0 735 118 A1 ist eine Pulverlackzusammensetzung bekannt, die aus einem epoxyfunktionalisiertem verzweigten Organopolysiloxan als Härter besteht und bei der als Binder Verbindungen vorgeschlagen werden, die funktionelle Gruppen tragen, die mit Epoxygruppen reagieren können.

Die Herstellung dieses Härters, der in der EP 0 735 118 A1 mit A bezeichnet ist, erfolgt über eine Gleichgewichtsreaktion zwischen epoxyfunktionalisierten Alkoxysilanen und verzweigten Organopolysiloxanen. Die verzweigten Organopolysiloxane werden dabei in allen Fällen durch Hydrolyse und Kondensation von Organochlorsilanen erhalten.

Es hat sich nun gezeigt, daß die Verwendung eines derartigen Härters, der aus Organochlorsilanen hergestellt worden ist, sich nachteilig beim Pulverlack, besonders in bezug auf den Korrosionsschutz auswirkt. Nachteilig macht sich der Einsatz eines derartigen Härters dann bemerkbar, wenn mit dem Pulverlack ein guter Korrosionsschutz ohne Vorbehandlung auf Metalloberflächen erreicht werden soll.

Ausgehend hiervon ist es deshalb die Aufgabe der vorliegenden Erfindung, eine Pulverlackzusammensetzung vorzuschlagen, mit der es möglich wird, eine Beschichtung zu erzielen, die auch ohne chemische Vorbehandlung einen ausreichenden Korrosionsschutz ermöglicht.

Gelöst wird diese Aufgabe durch die kennzeichnenden Merkmale des Anspuchs 1. Die Unteransprüche zeigen vorteilhafte Weiterbildungen auf.

Erfindungsgemäß wird somit vorgeschlagen, einen speziellen Härter für die Pulverlackzusammensetzung einzusetzen. Wesentlich beim Anmeldungsgegenstand ist, daß ein Härter eingesetzt wird, der nicht aus Chlorsilanen hergestellt wird, sondern der durch Hydrolyse und Kondensation von speziell ausgewählten Organosilanen und epoxyfunktionalisierten Silanen der allgemeinen Formeln I, II und III gebildet wird.

Zur Herstellung des Härters werden hierbei 70 - 95 Mol-% eines Organosilans der allgemeinen Formel I,

R₂SiX₂ I

worin R eine unsubstituierte oder substituierte Arylgruppe ist und X=OH oder OR' mit R'= C1-C4 Alkyl ist, eingesetzt. Die Phenylgruppe, die besonders bevorzugt ist, kann auch funktionelle Gruppen wie Amino- oder Mercapto-Gruppen enthalten. Auch können Arylalkyle zusammen mit Phenylen oder allein eingesetzt werden.

Die vorstehend definierten Verbindungen der allgemeinen Formel I werden mit 5 - 30 Mol-% eines epoxyfunktionalisierten Silans der allgemeinen Formel II

R''SiX₃ II

und/oder mit einem epoxyfunktionalisierten Silan der allgemeinen Formel III

R''R'''Six₂ III

umgesetzt. Bei den Verbindungen der allgemeinen Formeln II und III ist R'' eine epoxyfunktionelle organische Gruppe. R''' ist wieder ein C1-C4 Alkyl. X besitzt dabei die bei der allgemeinen Formel I angegebene Bedeutung.

Bei den Resten R'' sind insbesondere Glycidyloxypropyl und (3,4-Epoxycyclohexyl)ethyl bevorzugt.

Besonders bevorzugt bei den Verbindungen der allgemeinen Formel II ist 3-Glycidyloxypropyltrimethorysilan.

Wesentlich bei der Herstellung des Härters ist dabei, daß die angegebenen Mol-Verhältnisse von 70 - 95 Mol-% für die allgemeine Formel I und 5 - 30 Mol-% für die allgemeine Formel II und/oder III genau eingehalten werden. Die Reaktion kann bei 0 - 80 °C durchgeführt werden. Bevorzugt findet die Reaktion bei 20 - 60 °C statt.

Die so hergestellten Härter werden dann in Kombination mit an und für sich aus dem Stand der Technik bekannten Carboxyl-, Anhydrid- oder Aminogruppen enthaltenden Polieren als Binder eingesetzt. Spezielle Beispiele für die Binder sind carboxyfunktionalisierte organische Polymere wie z.B. die Polyesterharze Uralac P4800® mit einer Säurezahl von 24 - 28 oder Uralac P2200® mit einer Säurezahl von 48 - 55 und die Acrylharze SCX-819® mit einer durchschnittlichen Säurezahl von 75 oder SCX-839® mit einer durchschnittlichen Säurezahl von 105.

Bei der Pulverlackzusammensetzung wird dabei so vorgegangen, daß auf 100 Gewichtsteile des Binders 20 - 400 Gewichtsteile des Härters zugesetzt werden. Der Pulverlack kann darüberhinaus weitere an und für sich aus dem Stand der Technik bekannte Zusatzstoffe enthalten, wie Pigmente und/oder Füllstoffe und/oder Hitzestabilisatoren und/oder weitere Additive, wie z.B. Verlaufs- und Entgasungsmittel.

Der Pulverlack kann darüberhinaus gegebenenfalls noch Si-, Al-, Ti- oder Cr-Oxidpartikel enthalten, die auch optional organisch funktionalisiert sein können und Partikelgrößen von 5 - 500 nm aufweisen. Diese Oxidpartikel erhöhen die mechanische Festigkeit der Schicht, ohne ihre Transparenz zu beeinträchtigen. Außerdem können epoxyfunktionalisierte organische Harze zugesetzt werden, wobei auf 100 Gewichtsteile organisches Epoxidharz mehr als 10 Gewichtsteile Siliconharz kommen.

Wahlweise können die beschriebenen Pulverlacke nicht nur als Feststoffe, sondern auch als Lösungen oder Suspensionen auf das Substrat aufgebracht werden. Es sind protische und aprotische, polare und unpolare Lösungs- bzw. Suspensionsmittel geeignet und auch deren Gemische, insbesondere solche mit Wasser. Zusätzlich können Stabilisatoren hinzugefügt werden wie z.B. Salze von Carbonsäuren oder Aminocarbonsäuren, jeweils mit Kettenlängen von C2 bis C18.

Die Erfindung wird nachfolgend anhand eines Ausführungsbeispiels und Korrosionsuntersuchungen näher erläutert:

### Beispiel 1

3,00 Mol (732,96 g) Diphenyldimethoxysilan, 0,60 Mol (141,80 g) 3-Glycidyloxypropyltrimethorysilan, 3,90 Mol (70,20 g) Wasser und 0,18 Mol (14,78 g) 1-Methylimidazol werden zusammengewogen und bei 40 °C für 7 Stunden gerührt. Nach weiteren 14 Stunden Rühren bei Raumtemperatur wird die flüssige Phase bei 30 mbar/30 °C abrotiert und der entstandene Niederschlag wird in 4000 g Methylenchlorid kolloidal gelöst und sprühgetrocknet.

### Beispiel 2

0,30 Mol (73,30 g) Diphenyldimethoxysilan, 0,06 Mol (14,18 g) 3-Glycidyloxypropyltrimethoxysilan, 0,39 Mol (7,02 g) Wasser und 0,018 Mol (1,48 g) 1-Methylimidazol werden zusammengewogen und bei 40 °C für 7 Stunden gerührt. Anschließend wird die flüssige Phase bei 30 mbar/30 °C abrotiert und der entstandene Niederschlag wird bei 70 °C im Umlufttrockenschrank bis zur Gewichtskonstanz getrocknet. Der Feststoff wird in der 6-fachen Gewichtsmenge eines Wasser/Ethylacetat-Gemisches im Gewichtsverhältnis 1:1 suspendiert unter Zugabe von 5 Gew.-% (bezogen auf den Feststoff) Aminobuttersäure als Stabilisator. Diese Suspension wird mit einer Suspension des Acrylharzes SCX-839 (100 Gewichtsteile SCX-839 auf 100 Gewichtsteile Siloxan-Feststoff) unter Zugabe von 1.50 g BYK 361 und 0,50 g Benzoin vereinigt und mit der Naß-Sprühpistole aufgetragen.

Überraschenderweise zeichnen sich die Pulverlacke durch sehr gute Korrosionsbeständigkeit der Schichten aus, und zwar ohne chemische Vorbehandlung der Stahl-Prüfbleche wie z.B. Chromatieren. Die nach Anwendungsbeispiel 1 erhaltene ORMOCER-Komponente wurde mit 596 g Uralac P 4800 (carboxyfunktioneller Polyester mit einer durchschnittlichen Säurezahl von 26) sowie als Verlaufsmittel 14,7 g BYK 361 und 4,9 g Benzoin extrudiert, gemahlen, elektrostatisch auf Prüfbleche aufgesprüht und bei den unten angegebenen Temperaturen für 15 Minuten ausgehärtet. Die Prüfbleche wurden zuvor lediglich mit Ethylacetat und Ethanol gereinigt. Die Schichtdicken betrugen zwischen 30 und 40 µm. Es wurden Gitterschnitte gemacht und anschließend ein Schwitzwasser-Test nach DIN 50017 durchgeführt. Als Vergleich wurde der kommerziell erhältliche Pulverlack VEDOC PE herangezogen.

| Ansatz | Aushärtungs-Temperatur [°C] | Unterwanderung [Gt] |
|---|---|---|
| ORMOCER-PL | 180 | 2 |
| | 190 | 0 |
| | 200 | 0 |
| | 210 | 1 |
| VEDOC PE | 180 | 4 |
| | 190 | 5 |
| | 200 | 3 |
| | 210 | 2 |

Die durch Unterwanderung verrosteten Flächen wurden analog zur Gitterschnitt-Beurteilung nach DIN 53151 bewertet. Bei Aushärtungstemperaturen von 190 und 200 °C weist der ORMOCER-Pulverlack im Gegensatz zu VEDOC PE keine Unterwanderung auf.

## Patentansprüche

1. Pulverlackzusammensetzung,
enthaltend als Binder epoxyreaktive Polymere und als Härter epoxyfunktionelle Siloxanharze sowie gegebenenfalls Zusatzstoffe wie Pigmente und/oder Füllstoffe und/oder Hitzestabilisatoren und/oder Additive wie Verlauf- und Entgasungsmittel,
dadurch **gekennzeichnet,**
daß der Härter eine Verbindung ist, hergestellt durch Hydrolyse und Kondensation bei 0 - 80 °C von 70 - 95 Mol-% eines Organosilans der allgemeinen Formel I
R₂SiX₂ I
worin R eine substituierte oder unsubstituierte Arylgruppe, und
X=OH oder OR' mit R' = C1-C4 Alkyl ist, und
5 - 30 Mol-% eines epoxyfunktionalisierten Silans der allgemeinen Formel II
R''SiX₃ II
worin R'' eine epoxyfunktionelle organische Gruppe und X die unter Formel I angegebene Bedeutung hat und/oder
einem epoxyfunktionellem Silan der allgemeinen Formel III
R''R'''SiX₂ III
worin R'' und X die unter der Formel II angegebene Bedeutung haben und R''' ein C1-C4 Alkyl ist.

2. Pulverlack nach Anspruch 1,
dadurch gekennzeichnet, daß in der allgmeinen Formel I
R = Phenyl und/oder Arylalkyl
ggf. mit funktionellen Gruppen wie z.B. Amino- oder Mercapto-Gruppen ist.

3. Pulverlack nach Anspruch 2,
dadurch gekennzeichnet, daß die Verbindung der allgemeinen Formel I Diphenyldimethoxysilan ist.

4. Pulverlack nach einem der Ansprüche 1 bis 3,
dadurch gekennzeichnet, daß R'' in der allgmeinen Formel II oder III Glycidoxypropyl, (3,4 Epoxycyclohexyl)ethyl ist.

5. Pulverlack nach Anspruch 4,
dadurch gekennzeichnet, daß die Verbindung der allgmeinen Formel II 3-Glycidyloxypropyltrimethoxysilan ist.

6. Pulverlack nach mindestens einem der Ansprüche 1 bis 5,
dadurch gekennzeichnet, daß auf 100 Gewichtsanteile des Binders 20 bis 400 Gewichtsanteile des Härters eingesetzt werden.

7. Pulverlack nach mindestens einem der Ansprüche 1 bis 6,
dadurch gekennzeichnet, daß der Binder ausgewählt ist aus beliebigen epoxid-reaktiven Komponenten, die z.B. Carboxyl-, Anhydrid- oder Amino-Gruppen enthalten, welche - ggf. über eine Spacergruppe - sowohl an organische Polymere als auch an Organo-Polysiloxane gebunden sein können.
